# EUROPÄISCHE PATENTSCHRIFT

(11) **EP 2 184 548 B1**
(45) Veröffentlichungstag und Bekanntmachung des Hinweises auf die Patenterteilung: **29.06.2016**
(21) Anmeldenummer: 09175076.0
(22) Anmeldetag: 05.11.2009
(51) Int. Cl.: F24D 19/10

(54) **Verfahren und Vorrichtung zum Betreiben einer Solaranlage**
Method and device for operating a solar assembly
Procédé et dispositif destinés à l'utilisation d'une installation solaire

(30) Priorität: 08.11.2008 DE 102008056509
(43) Veröffentlichungstag der Anmeldung: 12.05.2010
(73) Patentinhaber: Robert Bosch GmbH, 70442 Stuttgart (DE)
(72) Erfinder: Lueke, Wolfgang, 48282 Emsdetten (DE); Arndt, Michael, 72762 Reutlingen (DE); Eisen, Thomas, 48493 Wettringen (DE); Hoetzel, Juergen, 61197 Florstadt (DE); Schulte, Uwe, 20144 Hamburg (DE); Oomen, Ronald, 7424 EP Deventer (NL); Helzel, Stefan, 35232 Dautphetal (DE); Warzecha, Andreas, 35460 Staufenberg (DE)

(56) Entgegenhaltungen:
- EP-A2- 1 860 383
- DE-A1- 10 257 309
- US-A- 5 206 819

## Beschreibung

Die Erfindung betrifft ein Verfahren und eine Vorrichtung zum Betreiben einer Solaranlage, insbesondere zur optimierten Wartung eines Solarsystems nach dem Oberbegriff des Patentanspruches 1.

Solaranlagen für die Erwärmung von Trink- oder Brauchwasser sowie die Heizungsunterstützung bestehen im Wesentlichen aus mindestens einem Solarkollektor, einem Solarkreislauf mit einer Pumpe zur Förderung eines Wärmeträgermediums, einer Regeleinrichtung und einem Wärmeverbraucher, meistens einem Warmwasserspeicher mit einem integrierten Wärmetauscher zur Übertragung der Wärme aus dem Solarkreislauf an den Wasserinhalt.

Mit einem Temperaturfühler wird die Temperatur des Wärmeträgermediums am Vorlauf mindestens eines Solarkollektors erfasst. Dabei ist es allgemein üblich, dass die Pumpe im Solarkreislauf bei Temperaturen über etwa 120 °C am Vorlauf des Solarkollektors nicht mehr anläuft und/oder aus dem Normalbetrieb der Regelung herausgenommen wird. Es liegt dann die sogenannte Stagnation vor. Die Pumpenabschaltung dient als Überhitzungsschutz für die Anlage, zum Beispiel um zu hohe Temperaturen im Warmwasserspeicher, die möglicherweise eine verstärkte Kalkbildung nach sich ziehen, zu vermeiden.

Aber auch die Solarkollektoren unterliegen aufgrund der intensiven Sonneneinstrahlung hohen Belastungen, besonders im oder nahe dem Stagnationsfall. Solche Abschaltungen der Solaranlage durch Überhitzungen können beispielsweise verursacht werden, wenn in den Warmwasserspeicher wegen zu hoher Temperaturen keine Solarwärme mehr eingebracht werden kann, und sich in den Solarkollektoren Dampf bildet. Die Pumpe im Solarkreislauf bleibt gesperrt, weil es sonst zu schädlichen Dampfschlägen im Bereich der Solarenkollektoren und Rohrleitungen kommen würde, wenn mit normaler Fördermenge der Pumpenbetrieb aus einem derartigen Überhitzungszustand wieder anlaufen würde.

Weiterhin wird dabei ein Solarfluid, welches den Solarkollektor bzw. den Kreislauf im Solarsystem durchströmt, erhöhten Temperaturbelastungen ausgesetzt. Dies bewirkt einen Verschleiß, welcher bei einem Solarfluid auch durch den Begriff "Stress" beschrieben wird. Dabei kommt es zum sogenannten Cracken innerhalb des meistens verwendeten Glycol-Wasser-Gemisches, wobei beispielsweise die Frostschutzeigenschaften schlechter werden. Im Stand der Technik gibt es verschiedene Lösungen, Stressbereiche für ein Solarfluid zu vermeiden. Jedoch lassen sich Stressbereiche nicht vollständig vermeiden, weil diese von verschiedenen Nutzungs-, Auslegungs-, Komponenten- und Betriebseinflüssen abhängen. Daher lässt sich der genaue Zeitpunkt einer notwendigen Wartung bisher nicht genau für die jeweilige Anlage vorhersagen.

Bei einer Wartung des Solarfluides werden beispielsweise dessen pH-Wert überprüft und die Frostschutzeigenschaften mit einem Refraktometer bestimmt. Abhängig von der Messung oder auch routinemäßig wird dann eventuell das Solarfluid ausgetauscht.

Die EP 1860383 A2 offenbart ein Verfahren zum Betreiben einer Solaranlage mit mindestens zwei Kollektorfeldern, mit dem in den jeweiligen Kollektorfeldern vertauschte Kollektortemperaturfühler, vertauschte Speichertemperaturfühler und/oder vertauschte Pumpen erkannt werden.

Der Erfindung liegt die Aufgabe zugrunde, die optimale Funktion eines Solarsystems über die Qualität des Solarfluids sicherzustellen.

Erfindungsgemäß wird dies durch die Gegenstände mit den Merkmalen des Patentanspruches 1 und des Patentanspruches 6 gelöst. Vorteilhafte Weiterbildungen sind den Unteransprüchen zu entnehmen.

Das efindungsgemäße Verfahren zum Betreiben einer Solaranlage, bei dem der Zustand des Solarfluids über ein Ausgangssignal eines im Solarkreislauf eingebauten, mit Solarfluid beaufschlagten Sensors erfasst und in der Regeleinrichtung ausgewertet wird, ist dadurch gekennzeichnet, dass der mit Solarfluid beaufschlagte Sensor Eigenschaften zur Messung des pH-Wertes, der Permittivität und/oder der Leitfähigkeit besitzt.

Wenn die Qualität des Solarfluids einen festlegbaren Grenzwert unterschreitet, welcher das Erreichen eines kritischen Solarfluidzustandes charakterisiert, wird von der Regeleinrichtung eine Wartungsmeldung in Abhängigkeit des bewerteten Zustands ausgegeben. Dabei ist der Grenzwert vorzugsweise werksseitig vorgegeben und kann bei Bedarf vom Installateur oder Betreiber der Anlage variiert werden.

Eine Signalauswerteelektronik verarbeitet zunächst ein Rohsignal des Sensors hinsichtlich der Qualität des Solarfluids. Dabei liefert der Sensor entweder einen analogen oder einen digitalen Wert an die Regeleinrichtung. Zum Beispiel würde der Wert Null bedeuten, dass die Qualität in Ordnung ist, und der Wert Eins, dass eine Wartungsmeldung erforderlich ist. Die Regeleinrichtung verarbeitet das entsprechende Signal und leitet daraus eine Wartungsmeldung ab.

Weiterhin besitzt der mit Solarfluid beaufschlagte Sensor Eigenkalibrierungsmittel zur Vermeidung und Korrektur von Messfehlern. Dazu ist in der Signalauswerteelektronik und/oder in der Regeleinrichtung ein Basiswert hinterlegt, welcher charakteristisch für das jeweils verwendete Solarfluid in Kombination mit der jeweiligen Anlagensituation ist. Für die Eigenkalibrierung des Sensors wird dieser Basiswert entweder durch manuelle Auslösung, beispielsweise bei Inbetriebnahme oder nach Wartungsarbeiten, oder in regelmäßigen Zeitabständen mit einer Basiswertmessung bestimmt.

Die erfindungsgemäße Vorrichtung zum Betreiben einer Solaranlage, bei der ein mit Solarfluid beaufschlagter Sensor im Solarkreislauf angeordnet ist, welcher dazu geeignet ist, den Zustand des Solarfluids zu erfassen und ein Ausgangssignal zu liefern, wobei die Regeleinrichtung dazu geeignet ist, das Ausgangssignal auszuwerten, ist dadurch gekennzeichnet, dass der mit Solarfluid beaufschlagte Sensor zu der Gruppe der pH-WertSensoren, der kapazitiven Sensoren und/oder der resistiven Sensoren gehört. Dabei werden kapazitive oder resistive Sensoren bevorzugt. Ein geeigneter kapazitiver Sensor besteht aus zwei leitfähigen Elektroden, beispielsweise aus Metall oder leitfähigem Kunststoff, welche isoliert vom Fluid so angeordnet sind, so dass das Fluid diese Elektroden durchfließen kann. Über eine Messung mit Wechselspannung oder -strom, bevorzugt im Bereich bis 250 kHz, wird die Kapazität der Anordnung gemessen. Diese korreliert dann mit dem Alterungszustand des Fluids. Dagegen sind bei einem resistiven Sensor zwei elektrisch leitende Elektroden, beispielsweise aus Metall oder leitfähigem Kunststoff, in Kontakt mit dem Solarfluid. Der Widerstand zwischen den Elektroden wird mittels angelegter Gleich- oder Wechselspannung oder einem Gleich- oder Wechselstrom gemessen und ist ein Maß für die Alterung des Fluids.

Der mit Solarfluid beaufschlagte Sensor zur Erfassung des Zustandes des Solarfluids kann mit einem Temperatursensor kombiniert ausgebildet sein. Weiterhin kann der Sensor auch als eigenständiges Bauteil mit integrierter Signalauswerteelektronik und Gehäuse versehen sein oder er wird in ein anderes Bauteil des Solarkreislaufs integriert.

Vorzugsweise besitzt der Sensor Eigenkalibrierungsmittel zur Vermeidung und Korrektur von Messfehlem. Dabei sind die Eigenkalibrierungsmittel des Sensors mehrkanalig ausgeführt, so dass insbesondere eine interne Kalibrierung und eine Kalibrierung zum Medium, d. h. zum Solarfluid, durchgeführt werden kann.

Mit dem erfindungsgemäßen Verfahren und der erfindungsgemäßen Vorrichtung werden die optimale Funktion eines Solarsystems über die Qualität des Solarfluids sichergestellt und die folgenden Vorteile realisiert:

Eine Wartungsmeldung wird direkt abhängig von dem Zustand des Solarfluids ausgegeben und dadurch wird der an eine Anlage angepasste, optimale Wartungszeitpunkt genau bestimmt. Durch die verbesserte Überwachung des Solarfluids wird die Standzeit eines Solarkollektors verlängert und die optimale Funktion eines Solarsystems sichergestellt, da mögliche Schäden durch ein nicht geeignetes oder in seinen Eigenschaften verändertes Solarfluid, beispielsweise mit eingeschränkten Frostschutzeigenschaften oder Klumpenbildung, verhindert oder zumindest deutlich verringert werden.

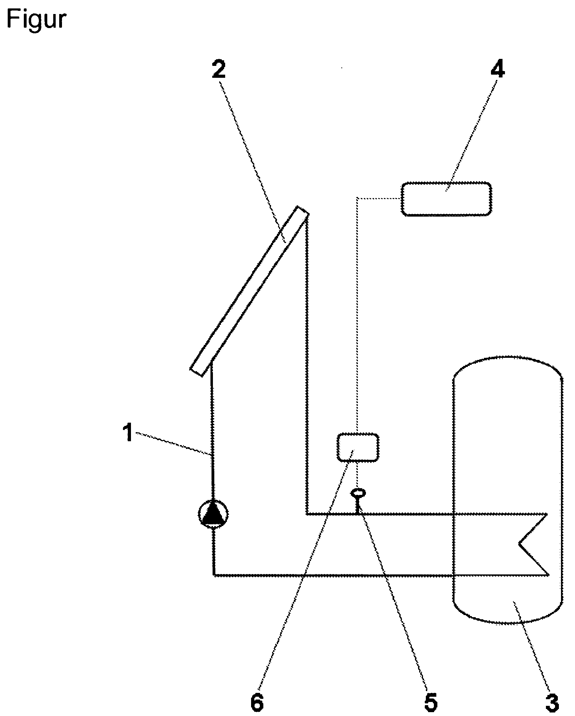

Die Zeichnung stellt ein Ausführungsbeispiel der Erfindung dar und zeigt in der einzigen Figur schematisch ein Solarsystem mit einem erfindungsgemäßen Sensor.

Das Solarsystem besitzt ein Solarfluid als Wärmeträgermedium in einem Solarkreislauf 1 über mindestens einen Solarkollektor 2 und mindestens einen Wärmeverbraucher 3 sowie eine Regeleinrichtung 4.

Der Zustand des Solarfluids wird über ein Ausgangssignal eines im Solarkreislauf 1 eingebauten, mit Solarfluid beaufschlagten Sensors 5 erfasst.

Eine Signalauswerteelektronik 6 verarbeitet zuerst ein Rohsignal des Sensors 5 hinsichtlich der Qualität des Solarfluids, und gibt ein Signal die Regeleinrichtung 4 weiter, wenn die Qualität des Solarfluids einen festlegbaren Grenzwert, welcher das Erreichen eines kritischen Solarfluidzustandes charakterisiert, unterschreitet. Auf dieser Basis leitet die Regeleinrichtung 4, wenn erforderlich, eine Wartungsmeldung ab.

## Patentansprüche

1. Verfahren zum Betreiben einer Solaranlage, insbesondere zur optimierten Wartung eines Solarsystems, mit Solarfluid als Wärmeträgermedium in einem Solarkreislauf (1) über mindestens einen Solarkollektor (2) und mindestens einen Wärmeverbraucher (3) sowie mit einer Regeleinrichtung (4), wobei der Zustand des Solarfluids über ein Ausgangssignal eines im Solarkreislauf (1) eingebauten, mit Solarfluid beaufschlagten Sensors (5) erfasst und in der Regeleinrichtung (4) ausgewertet wird,
**dadurch gekennzeichnet, dass** der mit Solarfluid beaufschlagte Sensor (5) Eigenschaften zur Messung des pH-Wertes, der Permittivität und/oder der Leitfähigkeit besitzt.

2. Verfahren nach Anspruch 1,
**dadurch gekennzeichnet, dass** von der Regeleinrichtung (4) eine Wartungsmeldung in Abhängigkeit des bewerteten Zustands ausgegeben wird, wenn die Qualität des Solarfluids einen festlegbaren Grenzwert, welcher das Erreichen eines kritischen Solarfluidzustandes charakterisiert, unterschreitet.

3. Verfahren nach Anspruch 1 oder 2,
**dadurch gekennzeichnet, dass** eine Signalauswerteelektronik (6) ein Rohsignal des Sensors (5) hinsichtlich der Qualität des Solarfluids vorverarbeitet, wobei der Sensor (5) entweder einen analogen oder einen digitalen Wert an die Regeleinrichtung (4) liefert, und dass die Regeleinrichtung (4) dieses Signal verarbeitet und daraus eine Wartungsmeldung ableitet.

4. Verfahren nach einem der Ansprüche 1 bis 3,
**dadurch gekennzeichnet, dass** der mit Solarfluid beaufschlagte Sensor (5) Eigenkalibrierungsmittel zur Vermeidung und Korrektur von Messfehlern besitzt, wobei ein Basiswert hinterlegt ist, welcher charakteristisch für das jeweils verwendete Solarfluid in Kombination mit der jeweiligen Anlagensituation ist.

5. Verfahren nach Anspruch 4,
**dadurch gekennzeichnet, dass** für die Eigenkalibrierung des Sensors (5) ein Basiswert, welcher charakteristisch für das jeweils verwendete Solarfluid in Kombination mit der jeweiligen Anlagensituation ist, durch manuelle Auslösung oder in regelmäßigen Zeitabständen mit einer Basiswertmessung bestimmt wird.

6. Vorrichtung zum Betreiben einer Solaranlage und zur Durchführung des Verfahrens nach mindestens einem der vorstehenden Ansprüche, insbesondere zur optimierten Wartung eines Solarsystems, mit einem Solarkreislauf (1), den ein Solarfluid als Wärmeträgermedium über mindestens einen Solarkollektor (2) und mindestens einen Wärmeverbraucher (3) durchströmt, mit einer Regeleinrichtung (4) sowie mit einem im Solarkreislauf (1) angeordneten und mit Solarfluid beaufschlagten Sensor (5), welcher dazu geeignet ist, den Zustand des Solarfluids zu erfassen und ein Ausgangssignal zu liefern, wobei die Regeleinrichtung (4) dazu geeignet ist, das Ausgangssignal auszuwerten,
**dadurch gekennzeichnet, dass** der mit Solarfluid beaufschlagte Sensor (5) ein Sensor aus der Gruppe der pH-Wert-Sensoren, der kapazitiven Sensoren und/oder der resistiven Sensoren ist.

7. Vorrichtung nach Anspruch 6,
**dadurch gekennzeichnet, dass** der mit Solarfluid beaufschlagte Sensor (5) zur Erfassung des Zustandes des Solarfluids mit einem Temperatursensor kombiniert ausgebildet ist.

8. Vorrichtung nach Anspruch 6 oder 7,
**dadurch gekennzeichnet, dass** der mit Solarfluid beaufschlagte Sensor (5) als eigenständiges Bauteil mit integrierter Signalauswerteelektronik (6) und Gehäuse ausgebildet ist.

9. Vorrichtung nach einem der Ansprüche 6 bis 8,
**dadurch gekennzeichnet, dass** der mit Solarfluid beaufschlagte Sensor (5) in ein anderes Bauteil des Solarkreislaufs integriert ist.

10. Vorrichtung nach einem der Ansprüche 6 bis 9,
**dadurch gekennzeichnet, dass** der mit Solarfluid beaufschlagte Sensor (5) Eigenkalibrierungsmittel zur Vermeidung und Korrektur von Messfehlern besitzt.

11. Vorrichtung nach Anspruch 10,
**dadurch gekennzeichnet, dass** die Eigenkalibrierungsmittel des Sensors (5) mehrkanalig, insbesondere für eine interne Kalibrierung und eine Kalibrierung zum Solarfluid, ausgeführt sind.

## Claims

1. Method for operating a solar installation, in particular for optimized servicing of a solar system, having solar fluid as heat carrier medium in a solar circuit (1) by means of at least one solar collector (2) and at least one heat consumer (3) and also having a control device (4), wherein the state of the solar fluid is detected by means of an output signal from a sensor (5), which is incorporated in the solar circuit (1) and which is acted on by solar fluid, and is evaluated in the control device (4), **characterized in that** the sensor (5), which is acted on by solar fluid, has properties for measuring the pH value, the permittivity and/or the conductivity.

2. Method according to Claim 1, **characterized in that** a servicing message is output by the control device (4) depending on the evaluated state when the quality of the solar fluid falls below a definable limit value which characterizes the situation of a critical solar fluid state being reached.

3. Method according to Claim 1 or 2, **characterized in that** a signal evaluation electronics system (6) pre-processes an unprocessed signal of the sensor (5) in respect of the quality of the solar fluid, wherein the sensor (5) supplies either an analogue or digital value to the control device (4), and **in that** the control device (4) processes this signal and derives a servicing message from the said signal.

4. Method according to one of Claims 1 to 3, **characterized in that** the sensor (5), which is acted on by solar fluid, has self-calibration means for avoiding and correcting measurement errors, wherein a base value which is characteristic of the respectively used solar fluid in combination with the respective installation situation is stored.

5. Method according to Claim 4, **characterized in that** a base value which is characteristic of the respectively used solar fluid in combination with the respective installation situation is determined by manual tripping or at regular time intervals with a base value measurement for the self-calibration of the sensor (5).

6. Apparatus for operating a solar installation and for carrying out the method according to at least one of the preceding claims, in particular for optimized servicing of a solar system, having a solar circuit (1) through which a solar fluid as heat carrier medium flows by means of at least one solar collector (2) and at least one heat consumer (3), having a control device (4) and also having a sensor (5) which is arranged in the solar circuit (1) and which is acted on by solar fluid and which is suitable for detecting the state of the solar fluid and for supplying an output signal, wherein the control device (4) is suitable for evaluating the output signal, **characterized in that** the sensor (5), which is acted on by solar fluid, is a sensor from the group comprising pH value sensors, capacitive sensors and/or resistive sensors.

7. Apparatus according to Claim 6, **characterized in that** the sensor (5), which is acted on by solar fluid, for detecting the state of the solar fluid is designed in a manner combined with a temperature sensor.

8. Apparatus according to Claim 6 or 7, **characterized in that** the sensor (5), which is acted on by solar fluid, is designed as an independent component with an integrated signal evaluation electronics system (6) and housing.

9. Apparatus according to one of Claims 6 to 8, **characterized in that** the sensor (5), which is acted on by solar fluid, is integrated in another component of the solar circuit.

10. Apparatus according to one of Claims 6 to 9, **characterized in that** the sensor (5), which is acted on by solar fluid, has self-calibration means for avoiding and correcting measurement errors.

11. Apparatus according to Claim 10, **characterized in that** the self-calibration means of the sensor (5) are of multi-channel design, in particular for internal calibration and calibration in respect of the solar fluid.

## Revendications

1. Procédé de mise en fonctionnement d'une installation solaire, notamment pour optimiser la maintenance d'un système solaire, comportant un fluide solaire en tant qu'agent caloporteur dans un circuit solaire (1) par l'intermédiaire d'au moins un collecteur solaire (2) et d'au moins un consommateur de chaleur (3) et comportant également un dispositif de régulation (4), dans lequel l'état du fluide solaire est détecté par l'intermédiaire d'un signal de sortie d'un capteur (5) intégré au circuit solaire (1) et exposé au fluide solaire et est évalué dans le dispositif de régulation (4),
**caractérisé en ce que** le capteur (5) exposé au fluide solaire possède des propriétés permettant de mesurer la valeur du pH, la permittivité et/ou la conductivité.

2. Procédé selon la revendication 1,
**caractérisé en ce qu'**un message de maintenance est délivré par le dispositif de régulation (4) en fonction de l'état évalué lorsque la qualité du fluide solaire s'abaisse en dessous d'une valeur limite pouvant être établie qui caractérise le fait qu'un état critique du fluide solaire a été atteint.

3. Procédé selon la revendication 1 ou 2,
**caractérisé en ce qu'**une électronique d'évaluation de signal (6) prétraite un signal brut du capteur (5) en ce qui concerne la qualité du fluide solaire, dans lequel le capteur (5) délivre une valeur soit analogique, soit numérique au dispositif de régulation (4), et **en ce que** le dispositif de régulation (4) traite ce signal et en déduit un message de maintenance.

4. Procédé selon l'une quelconque des revendications 1 à 3,
**caractérisé en ce que** le capteur (5) exposé au fluide solaire possède des moyens d'étalonnage propres destinés à empêcher et corriger des erreurs de mesure, une valeur de base est stockée, celle-ci étant caractéristique du fluide solaire respectivement utilisé en association avec la situation respective de l'installation.

5. Procédé selon la revendication 4,
**caractérisé en ce que**, pour l'étalonnage propre du capteur (5), une valeur de base est déterminée, celle-ci étant caractéristique du fluide solaire respectivement utilisé en association avec la situation respective de l'installation, par un déclenchement manuel ou à des intervalles de temps réguliers en association avec une mesure de la valeur de base.

6. Dispositif de mise en fonctionnement d'une installation solaire et de mise en oeuvre du procédé selon l'une quelconque des revendications précédentes, notamment pour optimiser la maintenance d'un système solaire, comportant un circuit solaire (1) dans lequel circule un fluide solaire en tant qu'agent caloporteur par l'intermédiaire d'au moins un collecteur solaire (2) et d'au moins un consommateur de chaleur (3), comportant un dispositif de régulation (4) ainsi qu'un capteur (5) disposé dans le circuit solaire (1) et exposé au fluide solaire, qui est conçu pour détecter l'état du fluide solaire et pour délivrer un signal de sortie, dans lequel le dispositif de régulation (4) est conçu pour évaluer le signal de sortie,
**caractérisé en ce que** le capteur (5) exposé au fluide solaire est un capteur choisi dans le groupe des capteurs de valeur de pH, des capteurs capacitifs et/ou des capteurs résistifs.

7. Dispositif selon la revendication 6,
**caractérisé en ce que** le capteur (5) exposé au fluide solaire est conçu pour détecter l'état du fluide solaire en étant combiné à un capteur de température.

8. Dispositif selon la revendication 6 ou 7,
**caractérisé en ce que** le capteur (5) exposé au fluide solaire est réalisé en tant que composant autonome ayant une électronique d'évaluation de signal (6) et un boîtier intégrés.

9. Dispositif selon l'une quelconque des revendications 6 à 8,
**caractérisé en ce que** le capteur (5) exposé au fluide solaire est intégré à un autre composant du circuit solaire.

10. Dispositif selon l'une quelconque des revendications 6 à 9,
**caractérisé en ce que** le capteur (5) exposé au fluide solaire possède un moyen d'étalonnage propre destiné à empêcher et corriger les erreurs de mesure.

11. Dispositif selon la revendication 10,
**caractérisé en ce que** les moyens d'étalonnage propres du capteur (5) sont du type multicanal, notamment pour un étalonnage interne et un étalonnage par rapport au fluide solaire.
